# EUROPÄISCHE PATENTSCHRIFT

(11) **EP 1 014 789 B1**
(45) Veröffentlichungstag und Bekanntmachung des Hinweises auf die Patenterteilung: **15.10.2003**
(21) Anmeldenummer: 98947470.5
(22) Anmeldetag: 28.08.1998
(51) Int. Cl.: A01N 41/06

(54) **GEPRESSTE CHLORAMIN T-TABLETTEN UND VERFAHREN ZU IHRER HERSTELLUNG**
COMPRESSED CHLORAMINE-T TABLETS AND METHOD FOR THE PRODUCTION THEREOF
COMPRIMES DE CHLORAMINE-T ET LEUR PROCEDE DE PRODUCTION

(30) Priorität: 03.09.1997 DE 19738424; 12.12.1997 DE 19755258
(43) Veröffentlichungstag der Anmeldung: 05.07.2000
(73) Patentinhaber: RMP Chemisch-Technische Spezialprodukte GmbH & Co. KG, 72119 Ammerbuch (DE)
(72) Erfinder: GEORG, Rolf, D-72119 Ammerbuch (DE); BOSCH, Hartmut, D-72119 Ammerbuch (DE)
(74) Vertreter: Patentanwälte Ruff, Wilhelm, Beier, Dauster & Partner
(86) Internationale Anmeldenummer: EP9805466
(87) Internationale Veröffentlichungsnummer: WO99011126

(56) Entgegenhaltungen:
- DE-A- 1 808 253
- DE-A- 2 835 683
- DE-A- 3 913 391
- GB-A- 955 897
- GB-A- 1 131 998
- CHEMICAL ABSTRACTS, vol. 101, no. 2, 9. Juli 1984 Columbus, Ohio, US; abstract no. 12137, V.ANDONOVA ET AL.: "Stabilizattion of chloramine B in tablet forms" XP002090784 & FARMATSIYA, Bd. 33, Nr. 6, 1983, Seiten 34-37,

## Beschreibung

Die Erfindung betrifft gepreßte Chloramin T-Tabletten und ein Verfahren zu ihrer Herstellung. Chloramin T ist ein bekanntes Desinfektions- und Frischhaltemittel, das in breiten Anwendungsbereichen einsetzbar ist. Es liegt normalerweise in pulverförmigem Zustand vor, in dem es schwer handhabbar ist. Dies ist zum Teil darauf zurückzuführen, daß das Pulver beim Handhaben leicht auffliegt. Es ist deshalb erwünscht, Chloramin T in kompakter Form, insbesondere in Tablettenform, vorliegen zu haben. Es sind bereits Tabletten bekannt, die Chloramin T enthalten. Diese Tabletten dienen zum Frischhalten von Schnittblumen, indem sie dem Wasser für die Blumen zugesetzt werden. Die Tabletten haben jedoch einen Wirkstoffgehalt unter 20 Gew.-%.

Für den gewerblichen Einsatz von Chloramin T, insbesondere im Hygienebereich, bei der Lebensmittelherstellung und bei der Desinfektion, sind nicht nur größere Mengen an Chloramin T erforderlich, sondern auch höhere Wirkstoffgehalte an Chloramin T erwünscht und zwar aus Kostengründen, Transportgründen und auch zur Vermeidung größerer Mengen an Hilfsstoffen, die keine Wirkung besitzen und in der Anwendung stören oder Entsorgungsprobleme bringen können. Pulverförmiges Chloramin T läßt sich jedoch ohne größere Mengen an Preßhilfsmitteln nicht mit ausreichender Festigkeit verpressen.

Der Erfindung liegt deshalb die Aufgabe zugrunde, Chloramin T-Tabletten mit einem hohen Wirkstoffgehalt und dementsprechend geringen Mengen an Preßhilfsmitteln und sonstigen Zusatzstoffen zu schaffen. Dabei sollen die Tabletten eine für die Handhabung ausreichende Festigkeit besitzen, verbunden mit einer schnellen Auflösbarkeit.

Die gepreßten Tabletten gemäß der Erfindung enthalten Chloramin T als Hauptbestandteil von mindestens 80 Gew.-% sowie 0,25 - 2 Gew.-% hochdisperses Siliziumdioxid, insbesondere als Presshilfsmittel, 0,5 - 4 Gew.-% Natriumcarboxymethylstärke, insbesondere als Sprengmittel, 1 - 3 Gew.-% hochreine mikrokristalline Cellulose, insbesondere als Bindemittel, 1 - 5 Gew.-% Natriumchlorid, insbesondere als Stabilisierungsmittel, gegebenenfalls Magnesiumstearat, insbesondere als Schmiermittel,sowie gegebenenfalls weitere Tablettierungshilfsmittel und Zusatzstoffe bis 100%. Neben Preßhilfsmittel und Lösungsvermittler bzw. Sprengmittel können, wenn erwünscht, auch noch weitere Nebenbestandteile vorhanden sein, insbesondere Füllstoffe oder auch andere Hilfsmittel. Der Wirkstoffgehalt an Chloramin T liegt vorzugsweise bei mindestens 90 Gew.-%. In besonderen Fällen kann er sogar bis zu 97 Gew.-% betragen. Solche hohen Wirkstoffgehalte sind möglich durch die Kombination von Preßhilfsmittel und Lösungsvermittler.

Vorzugsweise besitzt mindestens einer der Nebenbestandteile kombinierte Eigenschaften und dient sowohl als Preßhilfsmittel, als auch als Lösungsvermittler. Auf diese Weise ist es möglich, den Gehalt an Nebenbestandteilen gering zu halten und den Wirkstoffgehalt entsprechend zu erhöhen. Als Beispiel hierfür wäre Natriumcarboxymethylcellulose zu nennen. Vorzugsweise ist als weiteres Sprengmittel Maisstärke, enthalten.

Chloramin T (Natrium-p-toluolsulfonchloramid) hat als Desinfektionsmittel ein sehr breites Wirkungsspektrum. Es ist aktiv gegenüber Bakterien, Viren, Hefen, Pilze sowie Algen. Dadurch ergibt sich ein sehr breites Anwendungsspektrum. Von großer Bedeutung ist hier der Hygienebereich, insbesondere in Kliniken, öffentlichen Bädern, Schlachthöfen usw. Es ist ein wertvolles Desinfektionsmittel in der Landwirtschaft und in der Veterinärmedizin. Ferner eignet es sich zum Haltbarmachen von Wasser, insbesondere zum Sauberhalten von Brunnen. Vorzugsweise ist in den Tabletten ein Wirkstoffgehalt an Chloramin T von mehr als 80 Gew.-%, vorzugsweise mindestens 90 Gew.-%, vorgesehen. Dementsprechend gering ist der Gewichtsanteil an Hilfsstoffen, die im wesentlichen und in der Regel die Differenz zu 100 % ausmachen. Trotzdem hat sich gezeigt, daß eine größere Anzahl an Hilfsstoffen, die einen gegenseitigen synergistischen Effekt ausüben, günstiger ist, als ein größerer Gewichtsanteil von nur einigen wenigen Hilfsstoffen. Bevorzugte Ausführungsformen enthalten als Hilfsmittel bzw. Nebenbestandteile mehrere oder den größten Teil der nachfolgenden Stoffe:
a) Hochdisperses amorphes Siliciumdioxid (Kieselsäure). Dieses wird als Presshilfe und Gleitmittel eingesetzt. Es liegt in der Regel in Mengen von 0,25 bis 2 Gew.-%, insbesondere 0,5 bis 1 Gew.-% vor.
b) Natriumcarboxymethylcellulose. Diese kann in Form von verschiedenen Typen vorliegen, insbesondere mit einem Substitutionsgrad von 0,75 bis 0,8. Natriumcarboxymethylcellulose wirkt sowohl als Bindemittel, als auch als Auflösungsvermittler (Sprengmittel). Sie liegt in der Regel in Mengen von 1 bis 3 Gew.-%, insbesondere 1,5 bis 2 Gew.-% vor.
c) Natriumcarboxymethylstärke und/oder Natrium-Stärke-Glykolat. Besonders letzteres ist ein hervorragendes Sprengmittel. Die Mengen betragen in der Regel 0,5 bis 4 Gew.-%, insbesondere 1 bis 2,5 Gew.-%. Auch Croscarmellose (AVEBE) ist als Sprengmittel geeignet.
d) Maisstärke, insbesondere vorverkleisterte Maisstärke. Diese dient als Sprengmittel und wirkt in hervorragender Weise mit Natriumcarboxymethylstärke und insbesondere Natrium-Stärke-Glykolat zusammen. Die Mengen betragen in der Regel 0,5 bis 10 Gew.-%, insbesondere 1 bis 3 Gew.-%.
e) Hochreine Mikrokristalline Cellulose. Diese hat die Funktion eines Füllstoffes bzw. Bindemittels und begünstigt eine homogene Mischung beim Mischen der einzelnen Bestandteile. Die Mengen betragen in der Regel 0,5 bis 10 Gew.-%, insbesondere 1 bis 3 Gew.-%.
f) Gummi Arabicum. Dieses dient als Bindemittel und kann insbesondere auch anstelle von Polyethylenglykolen eingesetzt werden. Die Mengen betragen in der Regel 0,5 bis 5 Gew.-%, insbesondere 1 bis 3 Gew.-%.
g) Magnesiumstearat. Dies ist ein bekanntes Preßhilfsmittel, das glatte Oberflächen bei der Tablette ermöglicht und als Schmiermittel für die Preßstempel dient.
h) Natriumchlorid (Kochsalz). Dieses dient der elektrochemischen Stabilisierung des Chloramin T bei höheren Temperaturen und nicht optimalen Lagerungsbedingungen. Die Mengen betragen in der Regel 1 bis 5 Gew.-%, insbesondere 2 bis 3 Gew.-%.

Neben diesen Bestandteilen können für besondere Anwendungszwecke noch weitere Bestandteile vorgesehen sein, wie z.B. Tenside bzw. Reinigungsmittel sowie Farbstoffe und Duftstoffe. Die Tenside können in Mengen von 0.5 bis 2 Gew.-%, Stabilisatoren in Mengen von 0,5 bis 3 Gew.-%, Farbstoffe oder Duftstoffe in Mengen von 0,5 bis 2 Gew.-% vorhanden sein. In der Regel beträgt die Gesamtmenge an weiteren Bestandteilen zusammen weniger als 10 Gew.-%. Wenn die weiteren Bestandteile auch Eigenschaften als Presshilfsmittel oder Auflösungsvermittler haben, kann die Menge der obigen Presshilfsmittel und Lösungsvermittler verringert werden. Die einzelnen Bestandteile können auch durch andere mit äquivalenter Wirkung ersetzt sein.

Die Nebenbestandteile sind entweder wasserlöslich, was bevorzugt ist, oder sie liegen in so feinteiliger Form vor bzw. fallen bei der Desintegration der Tabletten in so feinteiliger Form an, daß die ganze Tablette im wesentlichen eine klare Lösung bildet. Chloramin T ist ohnehin in ausreichendem Maße wasserlöslich.

Bei einer bevorzugten Ausführungsform sind die Tabletten als Dosiertabletten ausgebildet. Hierzu ist die Tablettengröße vorzugsweise so eingestellt, daß mit vorbestimmten leicht abzumessenden Flüssigkeitsvolumina Lösungen mit einer vorbestimmten Chloramin T-Konzentration erhalten werden. Chloramin T ist wirksam in Konzentrationen von 0,001 bis 15 Gew.-%, wobei normalerweise Lösungen mit einer Konzentration von 5 % und weniger ausreichend sind. Bevorzugt sind Lösungen mit einem Wirkstoffgehalt an Chloramin T von ca. 0,5 Gew.-%. Deshalb sind Tablettengrößen bzw. Dosiertabletten bevorzugt, mit denen sich in einfacher Weise derartige Wirkstofflösungen erstellen lassen. Für die praktische Handhabung sind beispielsweise zwei Tablettengrößen ausreichend, insbesondere eine Tablettengröße mit einem Wirkstoffgehart von 2,5 g Chloramin T. Löst man diese Tablette in einem ½ I Wasser auf, dann erhält man eine Wirkstofflösung mit 0,5 Gew.-% Chloramin T. Die andere Tablettengröße enthält 50 g Chloramin T. Aufgelöst in 10 I Wasser ergeben sich wiederum Wirkstofflösungen von 0,5 Gew.-% Chloramin T. Größere Tabletten, insbesondere mit einem Durchmesser von 20 mm und mehr werden in der Regel als Tabs bezeichnet. Auch größere Komprimate oder Presslinge sollen von dem Begriff Tabletten umfaßt werden. In der Regel besitzen sie eine zylindrische, insbesondere flachzylindrische, Form. Die Tabletten können aber auch eine andere geometrische Form besitzen, z.B. kubisch oder kugelförmig ausgebildet sein. Bevorzugt sind Tablettenformen mit einer möglichst großen Oberfläche pro Gewicht, da hierbei sehr rasche Auflösungsgeschwindigkeiten erzielt werden. Die Tablettenhärte wird durch Auswahl der Hilfsstoffe und der Preßbedingungen vorzugsweise so eingestellt, daß die Tabletten noch von Hand zerbrochen werden können, dadurch wird die schnelle Auflösung ebenfalls gefördert. Weiterhin können beim Pressen Sollbruchstellen eingeprägt werden. Die Auflösung kann bei Umgebungstemperatur vorgenommen werden. Eine Erwärmung ist nicht erforderlich.

Chloramin T ist biologisch abbaubar. Bevorzugt sind die Nebenbestandteile so ausgesucht, daß sämtliche Bestandteile zumindest biologisch unbedenklich sind. Insbesondere ist mindestens die Hauptmenge der Nebenbestandteile biologisch abbaubar bzw. kompostierbar. Dies ist bei den oben genannten Bestandteilen der Fall. Insbesondere für den Anwendungsbereich der Hygiene und der Medizin sowie für die Trinkwasserbehandlung ist es vorgesehen, daß sämtliche Bestandteile mindestens in DAB-10-Qualität vorliegen, d.h. die für Arzneimittel vorgesehene Reinheit besitzen.

Die erfindungsgemäßen Tabletten besitzen mit Vorteil eine glatte geschlossene Oberfläche, ohne daß sie mit einem Überzug versehen sind. Dies ermöglicht die staubfreie Handhabung. Die Dichte der Tabletten liegt vorzugsweise im Bereich von 1,0 bis 1,3 g/cm³, insbesondere bei ca. 1,1 g/cm³. Die Tabletten können eine an sich bekannte Prägung aufweisen, die insbesondere Angaben über den Wirkstoff, die Wirkstoffmenge und/oder das zu verwendende Flüssigkeitsvolumen zum Gegenstand haben. Ferner kann eine Handelsmarke eingeprägt sein. Die Prägungen können mit den vorerwähnten Sollbruchmarkierungen kombiniert sein.

Vorzugsweise liegen die Tabletten in einer Verpackung vor, in der die Tabletten einzeln verpackt sind. Diese Verpackung ist insbesondere feuchtigkeitsdicht und luftdicht. Die Tabletten haben so eine sehr lange Lagerfähigkeit und sind unempfindlich gegen Einflüße von außen. Besonders geeignet für die Verpackung ist Natronkraftpapier, das eine PE (Polyethylen)-Beschichtung aufweist. Diese Beschichtung dient als Feuchtigkeitssperre und gleichzeitig als Heißsiegelschicht beim Verpacken. Dabei ist diese Schicht so dünn, daß die Verpackung nach Entnahme der Tablette als Ganzes biologisch abbaubar ist, so daß besondere Entsorgungen entfallen.

Die Erfindung betrifft auch ein Verfahren zur Herstellung der erfindungsgemäßen Tabletten. Bei diesen Verfahren werden sämtliche Ausgangsstoffe in pulverförmiger Form, insbesondere in sehr sehr feinpulvriger Form, trocken vorgemischt. Die Mischung wird in eine Tablettenpresse eingefüllt und zu Tabletten verpreßt. Zwischen dem Mischen und dem Verpressen kann eine Zwischenlagerung erfolgen, da Entmischungen nicht zu befürchten sind. Das Pressen kann bei Drücken von 50 bis 300 N/mm², insbesondere bei 100 bis 250 N/mm² vorgenommen werden. Bei einer Tablette mit einem Wirkstoffgehalt von 2,5 g Chloramin T und einem Durchmesser von 20 mm entspricht dies einem Preßdruck 4 bis 8 t und bei einer Tablette mit 50 g Feststoff und einem Durchmesser von 50 mm entspricht dies einem Preßdruck von ca. 20 t bis zu 24 t. Bei diesen Drücken werden Tabletten mit einer für die Handhabung ausreichenden Festigkeit erzielt, die sich aber mit der Hand noch zerbrechen lassen, wenn erwünscht.

Weitere Merkmale der Erfindung ergeben sich aus der nachfolgenden Beschreibung von Beispielen in Verbindung mit den Unteransprüchen. Hierbei können die einzelnen Merkmale jeweils für sich alleine oder zu mehreren in Kombination miteinander verwirklicht sein.

### Beispiel 1

Die nachfolgenden Bestandteile werden pulverförmig mit einem Reinheitsgrad von DAB 10 eingesetzt.
90 Gewichtsteile Chloramin T
1 Gewichtsteil hochdisperses amorphes Siliciumdioxid (Kieselsäure)
1,4 Gewichtsteile hochreine Natriumcarboxymethylcellulose
1,5 Gewichtsteile Natriumcarboxymethylstärke
0,8 Gewichtsteile hochreine mikrokristalline Cellulose
1,65 Gewichtsteile Gummi Arabicum
0,2 Gewichtsteile Magnesiumstearat
2,1 Gewichtsteile Natriumchlorid
0,05 Gewichtsteile Farbstoff
1,3 Gewichtsteile Duftstoff

Die Pulver werden in einem Rhönradmischer trocken gemischt und zur Zwischenlagerung in einen Silo befördert. Die Pulvermischung hat eine Dichte von ca. 0,8 g/cm³. Aus dem Silo wird die gewünschte Pulvermenge entnommen und zu Dosiertabletten mit vorbestimmtem Wirkstoffgehalt gepreßt. Es sind zwei Tablettengrößen vorgesehen, nämlich eine Tablette mit 20 mm Durchmesser enthaltend 2,5 g Chloramin T (Gesamtgewicht 2,78 g) und eine Tablette mit einem Durchmesser von 50 mm enthaltend 50 g Chloramin T (Gesamtgewicht 55,6 g).

Die aus diesen Bestandteilen bereitete Mischung läßt sich zu Tabletten mit ausreichenden mechanischen Eigenschaften und guten Auflösungseigenschaften pressen. Durch den Zusatz von Farbstoff und Duftstoff werden das Erscheinungsbild der Wirkstofftabletten und ihre Anwendung für den Benutzer angenehmer.

Die Presstabletten bzw. Tabs werden in mit PE-beschichteten Natronkraftpapier durch Heißsiegeln luftdicht verpackt. Zur Herstellung einer für viele Anwendungen geeigneten 0,5 %-igen Wirkstofflösung wird die Tablette mit 20 mm Durchmesser in einem ½ I Wasser aufgelöst und die große Tablette mit dem Durchmesser von 50 mm (Tab) in 10 I Wasser. Die kleinere Tablette läßt sich unter Rühren innerhalb von 25 bis 45 Sekunden in Wasser auflösen, dabei ist es bei der größeren Tablette vorteilhaft, wenn sie vor dem Eingeben in das Wasser bzw. Versetzen mit Wasser zerbrochen wird. Dies kann noch in der Packung vor dem Öffnen erfolgen.

## Patentansprüche

1. Gepreßte Tabletten enthaltend Chloramin T als Hauptbestandteil von mindestens 80 Gew.-% sowie
0,25 - 2 Gew.-% hochdisperses Siliziumdioxid, insbesondere als Presshilfsmittel,
0,5 - 4 Gew.-% Natriumcarboxymethylstärke, insbesondere als Sprengmittel,
1 - 3 Gew.-% hochreine mikrokristalline Cellulose, insbesondere als Bindemittel,
1 - 5 Gew.-% Natriumchlorid, insbesondere als Stabilisierungsmittel,
gegebenenfalls Magnesiumstearat, insbesondere als Schmiermittel sowie
gegebenenfalls weitere Tablettierungshilfsmittel, Zusatzstoffe bis 100%.

2. Tabletten nach Anspruch 1, **dadurch gekennzeichnet, daß** der Gehalt an Chloramin T bei mindestens 90 Gew.-% liegt.

3. Tabletten nach Anspruch 1 oder 2, **dadurch gekennzeichnet, daß** mindestens ein Nebenbestandteil vorgesehen ist, der sowohl als Preßhilfsmittel wirkt, als auch die Auflösung begünstigt.

4. Tabletten nach Anspruch 3, **dadurch gekennzeichnet, daß** als weiterer Nebenbestandteil, der sowohl als Preßhilfsmittel wirkt als auch die Auflösung begünstigt, Natriumcarboxymethylcellulose vorgesehen ist.

5. Tabletten nach einem der vorhergehenden Ansprüche, **dadurch gekennzeichnet, dass** als weiteres Hilfsmittel, insbesondere Sprengmittel, Maisstärke, enthalten ist.

6. Tabletten nach einem der vorhergehenden Ansprüche, **dadurch gekennzeichnet, daß** die Nebenbestandteile wasserlöslich oder zumindest so feinteilig sind, daß sich beim Auflösen der Tabletten eine im wesentlichen klare Lösung ergibt.

7. Tabletten nach einem der vorhergehenden Ansprüche, **dadurch gekennzeichnet, daß** die Tabletten als Dosiertabletten ausgebildet sind, insbesondere die Tablettengröße so eingestellt ist, daß mit vorbestimmten Flüssigkeitsvolumina Lösungen mit einer vorbestimmten Chloramin T-Konzentration, insbesondere einer Konzentration von ca. 0,5 Gew.-%, erhältlich sind.

8. Tabletten nach einem der vorhergehenden Ansprüche, **dadurch gekennzeichnet, daß** sämtliche Nebenbestandteile biologisch unschädlich sind.

9. Tabletten nach einem der vorhergehenden Ansprüche, **dadurch gekennzeichnet, daß** zumindest der größte Teil der Nebenbestandteile biologisch abbaubar ist, insbesondere sämtliche Nebenbestandteile biologisch abbaubar sind.

10. Tabletten nach einem der vorhergehenden Ansprüche, **dadurch gekennzeichnet, daß** sämtliche Bestandteile mindestens in DAB 10-Qualität vorliegen.

11. Tabletten nach einem der vorhergehenden Ansprüche, **dadurch gekennzeichnet, daß** sie vorzugsweise luft- und feuchtigkeitsdicht verpackt sind, insbesondere in mit Polyethylen beschichtetes Natronhaftpapier eingesiegelt sind.

12. Tabletten nach einem der vorhergehenden Ansprüche, **dadurch gekennzeichnet, daß** sie eine Dichte im Bereich von 1,00 g/cm³ bis 1,30 g/cm³, insbesondere ca. 1,1 g/cm³, besitzen.

13. Verfahren zur Herstellung der Tabletten nach einem der vorhergehenden Ansprüche, **dadurch gekennzeichnet, daß** die Ausgangsstoffe in pulverförmiger Form trocken gemischt werden, die Mischung in eine Tablettenpresse eingefüllt und zu Tabletten gepreßt wird.

14. Verfahren nach Anspruch 14, **dadurch gekennzeichnet, daß** das Pressen bei Drücken von 50 bis 300 N/mm², insbesondere 100 bis 250 N/mm² vorgenommen wird.

15. Verfahren nach Anspruch 14 oder 15, **dadurch gekennzeichnet, daß** insbesondere bei Tabletten mit einem Durchmesser größer 30 mm der Preßdruck so eingestellt wird, daß die Tabletten noch von Hand zerbrochen werden können.

## Claims

1. Pressed tablets containing chloramine-T as their main ingredient of at least 80 % by weight as well as
0.25 - 2 % by weight of highly dispersed silicon dioxide, more particular as a pressing agent,
0.5 - 4 % by weight of sodium carboxymethyl starch, more particularly as a disintegrant,
1 - 3 % by weight of highly purified microcrystalline cellulose, more particularly as a binding agent,
1 - 5 % by weight of sodium chloride, more particularly as a stabilizer, Magnesium stearate, if necessary, more particularly as a lubricant, and further tablet forming agents and additives, if necessary, to reach 100%.

2. Tablets according to claim 1, **characterized in that** the content of chloramine-T is at least 90 % by weight.

3. Tablets according to claim 1 or 2, **characterized in that** at least one minor constituent is included that acts both as a pressing agent and aids the dissolving process.

4. Tablets according to claim 3, **characterized in that** sodium carboxymethyl cellulose is included as an additional minor constituent to act both as a pressing agent and aid the dissolving process.

5. Tablets according to one of the previous claims, **characterized in that** corn starch is included as an additional aid, more particularly as disintegrant.

6. Tablets according to one of the previous claims, **characterized in that** the minor constituents are water-soluble, or are at least so finely dispersed that dissolving in water results in an essentially clear solution.

7. Tablets according to one of the previous claims, **characterized in that** the tablets are designed as dosed tablets, more particularly with a tablet size that solutions with a predetermined chloramine-T concentration, more particularly a concentration of approx. 0.5% by weight, are available by using predetermined liquid volumes.

8. Tablets according to one of the previous claims, **characterized in that** all minor constituents are biologically safe.

9. Tablets according to one of the previous claims, **characterized in that** at least most of the minor constituents are biologically degradable, more particularly that all minor constituents are biologically degradable.

10. Tablets according to one of the previous claims, **characterized in that** all constituents are present in at least DAB 10 quality.

11. Tablets according to one of the previous claims, **characterized in that** the tablets are preferably packaged airtight and moisture-proof, in particular sealed in soda kraft paper coated with polyethylene.

12. Tablets according to one of the previous claims, **characterized in that** they have a density from 1.00 g/cm³ to 1.30 g/cm³, more particularly approx. 1.1 g/cm³.

13. A procedure for the production of the tablets according to one of the previous claims, **characterized in that** the constituents are mixed dry in powdered form, the mixture is filled into a tablet press and pressed into tablets.

14. A process according to claim 14, **characterized in that** pressing takes place at pressures of 50 to 300 N/mm², more particularly 100 to 250 N/mm².

15. A procedure according to claim 14 or 15, **characterized in that**, in particular for tablets with a diameter of more than 30 mm, pressure is adjusted so that the tablets can still be broken apart by hand.

## Revendications

1. Comprimés pressés contenant de la chloramine T en tant que composant principal d'un pourcentage pondéral minimal de 80 ainsi qu'un pourcentage pondéral de
0,25 - 2 de dioxyde de silicium fortement dispersé, en particulier en tant qu'auxiliaire de pression,
un pourcentage pondéral de 0,5 - 4 de carboxyméthylamidon de sodium, en particulier en tant que agent de désintégration,
un pourcentage pondéral de 1 - 3 de cellulose microcristalline de grande pureté, en particulier en tant que liant,
un pourcentage pondéral de 1 - 5 de chlorure de sodium, en particulier en tant que stabilisateur,
le cas échéant, du stéarate de magnésium, en particulier en tant que lubrifiant, ainsi que,
le cas échéant, d'autres auxiliaires de préformage, additifs jusqu'à 100 %.

2. Comprimés selon la revendication 1, **caractérisés par le fait que** la teneur en chloramine T se situe au minimum à un pourcentage pondéral de 90.

3. Comprimés selon la revendication 1 ou 2, **caractérisés par le fait qu'**au moins un composant auxiliaire est prévu qui agit en tant qu'auxiliaire de pression et qui favorise également la dissolution.

4. Comprimés selon la revendication 3, **caractérisés par le fait que** de la carboxyméthylcellulose de sodium est prévue en tant qu'autre composant auxiliaire, agissant en tant qu'auxiliaire de pression et favorisant également la dissolution.

5. Comprimés selon l'une des revendications précédentes, **caractérisés par le fait qu'**ils contiennent, en tant qu'auxiliaire supplémentaire, en particulier en tant que agent de désintégration, de l'amidon de maïs.

6. Comprimés selon l'une des revendications précédentes, **caractérisés par le fait que** les composants annexes sont solubles dans l'eau ou au moins en particules si petites que l'on obtient, lors de la dissolution des comprimés, une solution essentiellement claire.

7. Comprimés selon l'une des revendications précédentes, **caractérisés par le fait que** les comprimés sont conçus en tant que comprimés dosables, que la taille des comprimés en particulier est conçue de façon à obtenir, avec des volumes de liquides prédéterminés, des solutions d'une concentration prédéterminée en chloramine T, en particulier une concentration d'un pourcentage pondéral d'env. 0,5.

8. Comprimés selon l'une des revendications précédentes, **caractérisés par le fait que** tous les composants annexes sont biologiquement inoffensifs.

9. Comprimés selon l'une des revendications précédentes, **caractérisés par le fait qu'**au moins la plus grande partie des composants auxiliaires est biodégradable, en particulier que tous les composants auxiliaires sont biodégradables.

10. Comprimés selon l'une des revendications précédentes, **caractérisés par le fait que** tous les composants sont présents au moins en qualité DAB 10.

11. Comprimés selon l'une des revendications précédentes, **caractérisés par le fait qu'**ils sont, de préférence, emballés de façon étanche à l'air et à l'humidité, en particulier scellés dans du papier kraft enduit de polyéthylène,

12. Comprimés selon l'une des revendications précédentes, **caractérisés par le fait qu'**ils possèdent une densité située dans la plage de 1,00 g/cm³ à 1,30 g/cm³, en particulier env. 1,1 g/cm³.

13. Procédé pour la fabrication des comprimés selon l'une des revendications précédentes, **caractérisé par le fait que** les matières de base sont mélangées sous forme de poudre sèche, que le mélange est introduit dans une presse à comprimé et pressé en comprimés.

14. Procédé selon la revendication 14, **caractérisé par le fait que** la pression est effectuée à des pressions de 50 à 300 N/mm², en particulier 100 à 250 N/mm².

15. Procédé selon la revendication 14 ou 15, **caractérisé par le fait que**, en particulier pour les comprimés d'un diamètre supérieur à 30 mm, la pression de compression est réglée de façon à ce que les comprimés puissent encore être rompus à la main.
